# EUROPEAN PATENT SPECIFICATION

(11) **EP 1 162 050 B1**
(45) Date of publication and mention of the grant of the patent: **31.07.2002**
(21) Application number: 01201857.8
(22) Date of filing: 17.05.2001
(51) Int. Cl.: B29C 44/32

(54) **Method for manufacturing an insulating element, and insulating element so obtained**
Verfahren zur Herstellung eines Isolierelements und derart hergestelltes Element
Procédé pour la fabrication d'un élément isolant et élément ainsi fabriqué

(30) Priority: 31.05.2000 NL 1015351
(43) Date of publication of application: 12.12.2001
(73) Proprietor: Merode B.V., 5061 KD Oisterwijk (NL)
(72) Inventor: Van Opstal, Cornelis Adrianus Peterus, 5066 XA Moergestel (NL); Van Bergen, Josephus Joannes Henricus, 5061 BC Oisterwijk (NL)
(74) Representative: Van kan, Johan Joseph Hubert, Ir.

(56) References cited:
- GB-A- 1 250 134
- US-A- 3 650 863

## Description

The present invention relates to a method for manufacturing an insulating element, which insulating element comprises a bottom plate, on which a foam material is present, wherein said bottom plate is provided with ribs on the longitudinal sides thereof. The present invention furthermore relates to an insulating element obtained by using such a method and to a wall or roof construction comprising such an element.

Such a method is known from GB-A-1 250 134, in accordance with which method for manufacturing an insulating element use is made of roof boarding consisting of a plate, for example a fibre plate, on which spaced-apart strengthening or stiffening laths are disposed in longitudinal direction. In this manner, not only a lower boundary is provided for the foamed material that is present thereon, but also lateral boundaries. Thus it is known to apply the foamable material in such a manner that it slopes upwards against the sides of the laths. Thus the laths themselves are partially insulated, so that the amount of heat that may be transmitted via panels and laths, which is limited anyway, is reduced even further.

One drawback of such a method is that the length of the spaced-apart stiffening laths disposed in longitudinal direction must be selected in advance. Said length is mainly determined by the dimension of the final insulating element, which insulating element is thus limited to the commercially available standard size of the wood, which material forms the basis of the stiffening laths. Moreover, it has become apparent that the laths that form lateral boundaries do not properly abut against each other, which has an adverse effect on the structural strength and the insulation value of the element.

Another drawback is the fact that the purchase of the wood in the desired dimension must be taken into account at an early stage of the production process already, because in fact the order book of the final insulation elements determines the dimension of the wood to be used.

US-A-3,650,863 discloses a method for making laminated, foam-filled structural units, particularly for use in wall constructions, wherein a foamable synthetic material is applied to a baseplate, after which said material is foamed. Said foam layer is first provided with a cover layer, and subsequently with an intermediate layer, for example a fire-retardant or sound-insulating layer, after which an upper plate is provided, in such a manner that a space is created between said upper plate and said intermediate layer, into which space a second foamable, synthetic material is introduced, which is foamed in a final step. The intermediate layer consists of a plurality of sections which have profiled or stepped interengaging transversely extending edges for providing more even and reproducible positioning of the individual sections without a gap between, the sections. The materials used for the baseplate and the upper plate in said US patent are preferably metals, which can readily be given their desired shape and/or dimensions by means of bending operations, but which must be cut into elements having the desired length by means of costly cutting installations. Nothing is furthermore said in the aforesaid US patent specification about using ribs as lateral boundaries for a foam material. Moreover, the structure of the present insulating element is essentially different from that of the element according to the aforesaid US patent specification, which element comprises, in succession, a baseplate, a first foam layer, a cover layer, an intermediate layer, a second foam layer and an upper plate.

Thus it is an object of the invention to provide a method for manufacturing an insulating element, which method eliminates the aforesaid drawbacks of the prior art.

Another object of the invention is to provide a method for manufacturing an insulating element, wherein no special requirements are made as regards the dimensions of the wood, which considerably simplifies the purchasing of wood, as a result of which a significant saving in costs is realised.

Another object of the present invention is to provide a method for manufacturing insulating elements, by means of which method insulating elements can be manufactured in any dimensions that are required without any advance planning being required.

Another object of the present invention is to provide a method for manufacturing an insulating element, which method in fact provides an insulating element of infinite length, which can be cut to the intended length, using conventional sawing plants, in accordance with any requirements that may be made.

According to the present invention, the method as referred to in the introduction comprises the following steps:
a) forming a profile on the end face of the ribs;
b) applying an adhesive to the profiled end face of the rib;
c) placing such a rib onto the longitudinal side of the bottom plate;
d) fitting a new rib into the adhesive-coated profile of the rib of step c), which new rib is profiled on both end faces, wherein said rib is in line with the rib that was previously placed onto the longitudinal side of the bottom plate, and which is provided with an adhesive on the end face thereof, which end face fits a next, profiled rib, and possibly repeating step d);
e) introducing a foam material into the space bounded by the ribs on the two longitudinal sides of the bottom plate and the bottom plate, and curing said foam material; and finally
f) cutting the bottom plate thus provided with ribs and with foam material to size so as to form insulating elements.

The use of ribs having profiled end faces makes it possible to manufacture according to the present method an insulating element of, in fact, infinite length, wherein finally a step f) is carried out in order to obtain the desired length. Since the end faces of successive ribs are joined via the respective profiles that are present thereon, the rib that is present on the longitudinal side of the bottom plate in fact forms a rib of infinite length, which rib can subsequently be cut to any desired dimension of the insulating element. Thus the purchase of ribs is no longer bound by the dimension of the final insulating element, but ribs can be purchased regardless of their length, which enables a significant reduction of costs.

It should be understood that, in accordance with the present invention, only one end face of the first rib needs to be profiled, after which the next rib, which is profiled on both end faces, will be joined with said first rib with a proper fit, and subsequently a next rib, both end faces of which are likewise profiled, will be joined with the second rib with a proper fit. This procedure is repeated, wherein the last rib, just like the first rib, only needs to be profiled on one end face thereof. Preferably, adhesive is only applied to one profile for the purpose of moving the profiles one into another and durably joining said profiles.

Furthermore it is preferable to place the profiled ribs on both longitudinal sides of the bottom plate in step c), thus realising an optimum saving of costs, because it is no longer necessary to purchase the ribs in dependence on the desired length and the exact dimensions of the end face. It should be understood that the ribs that are used for the two longitudinal sides do not necessarily have to be identical in length, but that the ribs of the left-hand side, for example, may be staggered with respect to the ribs on the right-hand side. In addition, the ribs used for the left-hand side or for the right-hand side may differ from each other as regards their length. Possibly, step a) may be preceded by a cutting operation so as to obtain the desired dimensions, in particular in vertical direction, of the ribs.

Furthermore it is preferable to apply an adhesive to the bottom plate, at the position where the present rib will be disposed, prior to carrying out step c). In accordance with such an additional step, the rib is fixed to the bottom plate, preferably by means of an adhesive, because a strong connection is obtained in that manner. In addition, a good insulation value will be obtained.

In particular, step d) is carried out while exerting a force, in such a manner that the profiles of the ribs are joined together with a close fit. As a result of the ribs being pressed together by exerting a force, a close contact between the two profiles is effected, so that a dimensionally stable insulating element is obtained, which can easily be cut to the desired length and which will not break and/or sag.

It is especially preferable to fix the joint between the ribs that has been formed in step d) to the bottom plate by means of a clamped connection. Such a clamped connection is in particular desirable in order to allow the adhesive that has been applied between the profiles to cure properly, so that a durable connection between the ribs will be obtained. Preferably, a stapled connection is used as said clamped connection, so that the ribs and the bottom plate will be "nailed together" in order to allow the adhesive to cure, after which the joint thus obtained can be considered to form part of the construction.

Since the ribs are durably joined together, using a profile and an adhesive, it is necessary to form said profiles in such a manner that they will closely fit together. Preferably, the forming of profiles is carried out by means of sawing and/or milling operations. A toothed profiled has proved to be a suitable profile, which profile forms a durable connection between the ribs.

The adhesive that is used in the present invention is preferably an adhesive with a base of isocyanate prepolymer, wherein the adhesive preferably has an open time of at least 6 minutes. Experiments have shown that such an isocyanate prepolymer-based adhesive provides a strong connection between the ribs, whereby it is in particular desirable, in view of the adhesive, for the ribs to have a moisture content of maximally 20%. It has become apparent that a moisture content of more than 20% has a negative effect on the bonding strength.

The invention will now be explained in more detail by means of an example, wherein reference will be made to the following drawings:
Figure 1 is a perspective view of a bottom plate provided with ribs according to the present invention.
Figure 2 is a detail view of the profile joint between the ribs according to the present invention.
Figure 3 is a view of an insulating element of infinite length which has been obtained by using the method according to the present invention.

### Example.

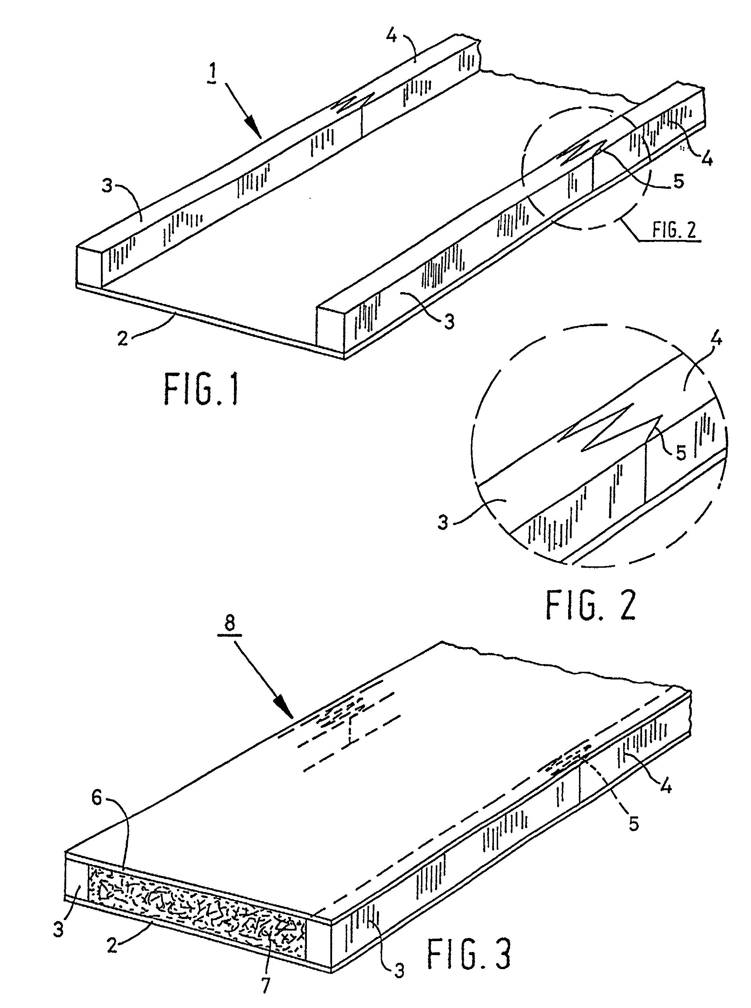

Figure 1 schematically shows an element 1, viz. a bottom plate 2, on both longitudinal sides of which ribs 3, 4 are disposed. Rib 3 is provided with a profile on the end face thereof, which profile fits in the profile 5 of the next rib 4. Ribs 3, 4 are fixed to bottom plate 2 by means of an adhesive, possibly using a stapled connection as well. Although two ribs 3, 4 are shown in each of the present figures, it should be understood that the invention is by no means restricted to any particular number of ribs.

Figure 2 schematically shows the interlocking profiles 5 of ribs 3, 4. Since the profiles 5 of ribs 3, 4 are joined together with a close fit, using an adhesive applied to profile 5, a durable connection is obtained.

Figure 3 schematically shows the final insulating element 8, wherein the space between ribs 3, 4 and bottom plate 2 is filled with a foam material 7, and wherein said space is closed at the upper side by means of an upper plate 6. The durable connection between ribs 3, 4 mutually on the one hand and ribs 3, 4 and bottom plate 2 on the other hand makes it possible to cut the insulating element to any desired length.

The present invention is preferably carried out in such a manner that unacceptable shrinkage cannot occur at the ribs, which are made of wood. In order to prevent such shrinkage, the ribs are worked by means of a four-sided planing machine, after which the ribs thus planed are placed in a buffer magazine. Using a special sawing/milling plant, the ribs are worked and provided with a profile on their end faces. An adhesive is applied to the profile on the end faces of the ribs by means of a glue nozzle, wherein the glue nozzle is so constructed that it will deliver a fault signal when the amount of adhesive that is being delivered is too small. From said sawing/milling plant, the ribs are distributed over rib magazines which will deliver the ribs on demand to a bottom plate, which is unwound from a supply roll. The moment said demand is made, said ribs will land on either side of the bottom plate. Immediately after the ribs have been positioned on the bottom plate, whereby the profile of one rib is pressed into the other rib, a force is exerted so as to press the teeth of the profiles into their respective bottoms. Preferably, an adhesive is applied to the bottom plate at the position where the rib will be disposed so as to effect the rib/bottom plate connection, after which a stapled connection may additionally be effected. Finally, the lateral boundary formed by the ribs on the bottom plate is filled with an insulating material, after which an upper plate is preferably placed on top of the insulating material. Finally, the assembly of bottom plate, ribs, foam material and, possibly, upper plate is cut to the desired size by means of a sawing plant.

The present invention furthermore relates to an insulating element as obtained by using the above-described method comprising a bottom plate (2), on which a foam material (7) is present, wherein said bottom plate (2) is provided with ribs (3, 4) on the longitudinal sides thereof, between which said foam material (7) is present, and comprising a junction mark of two successive ribs (3, 4) assembled end-to-end along an adhesive-coated fitting profile (5) on the facing end faces of the ribs (3, 4). It is in particular preferable to use the insulating element that has been obtained by means of the present invention as a wall or roof construction.

## Claims

1. A method for manufacturing an insulating element (8), which insulating element (8) comprises a bottom plate (2), on which a foam material (7) is present, wherein said bottom plate (2) is provided with ribs (3, 4) on the longitudinal sides thereof, between which said foam material (7) is present, comprising :
a) forming a profile (5) on the end face of the rib (3, 4);
b) applying an adhesive to the profiled (5) end face of the ribs (3, 4);
c) placing such a rib (3, 4)onto the longitudinal side of the bottom plate (2);
d) fitting a new rib (3, 4) into the adhesive-coated profile (5) of the rib (3, 4) of step c), which new rib (3, 4) is profiled on both end faces, wherein said rib (3, 4) is in line with the rib (3, 4) that was previously placed onto the longitudinal side of the bottom plate (2), and which is provided with an adhesive on the end face thereof, which end face fits a next, profiled (5) rib (3, 4), and possibly repeating step d);
e) introducing a foam material (7) into the space bounded by the ribs (3, 4) on the two longitudinal sides of the bottom plate (2) and the bottom plate (2), and curing said foam material (7); and finally
f) cutting the bottom plate (2) thus provided with ribs (3, 4) and with foam material (7) to size so as to form insulating elements (8).

2. A method according to claim 1, **characterized in that** in step c) the profiled ribs (3, 4) are placed onto both longitudinal sides of the bottom plate (2).

3. A method according to claims 1 - 2, **characterized in that** an adhesive is applied to the bottom plate (2), at the position where the rib (3, 4) will be disposed, prior to carrying out step c).

4. A method according to claims 1 - 3, **characterized in that** step d) is carried out while exerting a force, in such a manner that the profiles (5) of the ribs (3, 4) are joined together with a close fit.

5. A method according to claims 1 - 4, **characterized in that** the joint between the ribs (3, 4) that has been formed in step d) is fixed to the bottom plate (2) by means of a clamped connection.

6. A method according to claims 1 - 5, **characterized in that** the forming of said profile (5) takes place by means of sawing and/or milling operations.

7. A method according to claims 1 - 6, **characterized in that** a toothed profile is used.

8. A method according to claims 1 - 7, **characterized in that** step e) furthermore comprises the provision of an upper plate (6) on the bottom plate (2) that is provided with ribs (3, 4) and a foam material (7).

9. A method according to claim 8, **characterized in that** said upper plate (6) is fixed by glueing.

10. A method according to claims 1 - 9, **characterized in that** an isocyanate prepolymer-based adhesive is used.

11. A method according to claims 1 - 10, **characterized in that** an adhesive having an open time of at least 6 minutes is used.

12. A method according to claims 1 - 11, **characterized in that** the moisture content of the rib (3, 4) is maximally 20%.

13. An insulating element as obtained in accordance with the method defined in claims 1 - 12 comprising a bottom plate (2), on which a foam material (7) is present, wherein said bottom plate (2) is provided with ribs (3, 4) on the longitudinal sides thereof, between which said foam material (7) is present, and comprising a junction mark of two successive ribs (3, 4) assembled end-to-end along an adhesive-coated fitting profile (5) on the facing end faces of the ribs (3, 4).

14. A wall or roof construction comprising one or more insulating elements (8) according to claim 13.

## Patentansprüche

1. Verfahren zur Herstellung eines Isolierelements (8), wobei das Isolierelement (8) eine Bodenplatte (2), auf welcher ein Schaummaterial (7) vorhanden ist, umfaßt, wobei die besagte Bodenplatte (2) an ihren Längsseiten mit Rippen (3, 4) versehen ist, zwischen denen das besagte Schaummaterial (7) vorhanden ist, umfassend:
a) Ausbilden eines Profils (5) an der Stirnfläche der Rippe (3, 4);
b) Aufbringung eines Klebstoffs auf die profilierte (5) Stirnseite der Rippen (3, 4);
c) Plazieren einer solchen Rippe (3, 4) auf die Längsseite der Bodenplatte (2);
d) Einpassen einer neuen Rippe (3, 4) in das klebstoffbeschichtete Profil (5) der Rippe (3, 4) aus Schritt c), wobei die neue Rippe (3, 4) auf beiden Stirnseiten profiliert ist, wobei die besagte Rippe (3, 4) mit der Rippe (3, 4), die zuvor auf der Längsseite der Bodenplatte (2) angeordnet wurde, in einer Linie liegt, wobei die Rippe (3, 4) mit einem Klebstoff auf ihrer Stirnseite versehen ist, wobei die Stirnseite zu einer nächsten, profilierten (5) Rippe (3, 4) paßt, und eventuelles Wiederholen von Schritt d);
e) Zuführen eines Schaummaterials (7) in den Raum, der durch die Rippen (3, 4) auf den beiden Längsseiten der Bodenplatte (2) und durch die Bodenplatte (2) begrenzt ist, und Aushärten des besagten Schaummaterials (7); und zuletzt
f) Zuschneiden der Größe der so mit Rippen (3, 4) und mit Schaummaterial (7) versehenen Bodenplatte (2) zur Ausbildung eines Isolierelements (8).

2. Verfahren nach Anspruch 1, **dadurch gekennzeichnet, daß** in Schritt c) die profilierten Rippen (3, 4) auf beiden Längsseiten der Bodenplatte (2) angeordnet werden.

3. Verfahren nach Anspruch 1 oder 2, **dadurch gekennzeichnet, daß** vor der Ausführung von Schritt c) ein Klebstoff an den Stellen, an denen die Rippen (3, 4) angeordnet werden, auf die Bodenplatte (2) aufgebracht wird.

4. Verfahren nach einem der Ansprüche 1 bis 3, **dadurch gekennzeichnet, daß** Schritt d) während des Ausübens einer Kraft in einer Weise durchgeführt wird, daß die Profile (5) der Rippen (3, 4) mit einer engen Passung zusammengebracht werden.

5. Verfahren nach einem der Ansprüche 1 bis 4, **dadurch gekennzeichnet, daß** die Verbindung zwischen den Rippen (3, 4), die in Schritt d) gebildet wurde, mittels einer geklammerten Verbindung mit der Bodenplatte (2) verbunden ist.

6. Verfahren nach einem der Ansprüche 1 bis 5, **dadurch gekennzeichnet, daß** die Ausbildung des besagten Profils (5) durch Säge- und/oder Fräsvorgänge stattfindet.

7. Verfahren nach einem der Ansprüche 1 bis 6, **dadurch gekennzeichnet, daß** ein gezahntes Profil verwendet wird.

8. Verfahren nach einem der Ansprüche 1 bis 7, **dadurch gekennzeichnet, daß** Schritt e) des weiteren das Vorsehen einer oberen Platte (6) auf der Bodenplatte (2), die mit Rippen (3, 4) und einem Schaummaterial (7) versehen ist, umfaßt.

9. Verfahren nach Anspruch 8, **dadurch gekennzeichnet, daß** die obere Platte (6) durch Verkleben festgelegt ist.

10. Verfahren nach einem der Ansprüche 1 bis 9, **dadurch gekennzeichnet, daß** ein auf einem Isocyanat-Vorpolymer basierender Klebstoff verwendet wird.

11. Verfahren nach einem der Ansprüche 1 bis 10, **dadurch gekennzeichnet, daß** ein Klebstoff mit einer Verarbeitungszeit von mindestens 6 Minuten verwendet wird.

12. Verfahren nach einem der Ansprüche 1 bis 11, **dadurch gekennzeichnet, daß** der Feuchtigkeitsgehalt der Rippen (3, 4) maximal 20% beträgt.

13. Ein Isolierelement, das gemäß dem Verfahren der Ansprüche 1 bis 12 erhalten wurde, umfassend eine Bodenplatte (2), auf der ein Schaummaterial (7) vorgesehen ist, wobei die besagte Bodenplatte (2) auf ihren Längsseiten mit Rippen (3, 4) versehen ist, zwischen denen besagtes Schaummaterial (7) vorhanden ist, und umfassend eine Verbindungsstelle zweier aufeinanderfolgender Rippen (3, 4), die Ende an Ende entlang einem klebstoff-beschichteten Einpaßprofil (5) auf den gegenüberliegenden Stirnseiten der Rippen (3, 4) zusammengesetzt sind.

14. Eine Wand oder Dachkonstruktion, umfassend ein oder mehrere Isolierelemente (8) gemäß Anspruch 13.

## Revendications

1. Procédé pour la fabrication d'un élément isolant (8), lequel élément isolant (8) comprend une plaque inférieure (2), sur laquelle est présent un matériau moussé (7), dans lequel ladite plaque inférieure (2) est pourvue de nervures (3, 4) sur ses côtés longitudinaux, entre lesquelles est présent ledit matériau moussé (7), comprenant les étapes consistant à :
a) former un profil ( 5) sur la face d'extrémité de la nervure (3, 4) ;
b) appliquer un adhésif sur la face d'extrémité profilée (5) des nervures (3, 4) ;
c) placer cette nervure (3, 4) sur le côté longitudinal de la plaque inférieure (2) ;
d) insérer une nouvelle nervure (3, 4) dans le profil (5) revêtu d'un adhésif de la nervure (3, 4) de l'étape c), laquelle nouvelle nervure (3, 4) est profilée sur ses deux faces d'extrémité, dans lequel ladite nervure (3, 4) est alignée avec la nervure (3, 4) qui a été placée auparavant sur le côté longitudinal de la plaque inférieure (2) et qui est pourvue d'un adhésif sur sa face d'extrémité, laquelle face d'extrémité s'ajuste avec une nervure profilée (5) suivante (3, 4), et à répéter éventuellement l'étape d) ;
e) introduire un matériau moussé (7) dans l'espace relié par les nervures (3, 4) sur les deux côtés longitudinaux de la plaque inférieure (2) et la plaque inférieure (2), et faire durcir ledit matériau moussé (7) ; et enfin
f) découper la plaque inférieure (2) ainsi pourvue de nervures (3, 4) et du matériau moussé (7) pour la dimensionner de façon à former des éléments isolants (8).

2. Procédé selon la revendication 1, **caractérisé en ce que**, à l'étape c), les nervures profilées (3, 4) sont placées sur les deux côtés longitudinaux de la plaque inférieure (2).

3. Procédé selon les revendications 1 et 2, **caractérisé en ce qu'**un adhésif est appliqué sur la plaque inférieure (2), dans une position dans laquelle la nervure (3, 4) va être disposée, avant de réaliser l'étape c).

4. Procédé selon les revendications 1 à 3, **caractérisé en ce que** l'étape d) est réalisée tout en exerçant une force, de telle sorte que les profils (5) des nervures (3, 4) soient reliés par un ajustement étroit.

5. Procédé selon les revendications 1 à 4, **caractérisé en ce que** la jointure entre les nervures (3, 4) qui a été formée à l'étape d) est fixée sur la plaque inférieure (2) au moyen d'un raccord serré.

6. Procédé selon les revendications 1 à 5, **caractérisé en ce que** la mise en forme dudit profil (5) se déroule par des opérations de sciage/et ou de broyage.

7. Procédé selon les revendications 1 à 6, **caractérisé en ce que** le profil denté est utilisé.

8. Procédé selon les revendications 1 à 7, **caractérisé en ce que** l'étape e) comprend en outre le placement d'une plaque supérieure (6) sur la plaque inférieure (2) qui est pourvue de nervures (3, 4) et d'un matériau moussé (7).

9. Procédé selon la revendication 8, **caractérisé en ce que** ladite plaque supérieure (6) est fixée par collage.

10. Procédé selon les revendications 1 à 9, **caractérisé en ce qu'**un adhésif à base de prépolymère d'isocyanate est utilisé.

11. Procédé selon les revendications 1 à 10, **caractérisé en ce qu'**un adhésif ayant un temps ouvert d'au moins 6 minutes est utilisé.

12. Procédé selon les revendications 1 à 11, **caractérisé en ce que** la teneur en humidité de la nervure (3, 4) est d'au plus 20 %.

13. Elément isolant tel qu'il est obtenu selon le procédé défini dans les revendications 1 à 12, comprenant une plaque inférieure (2), sur laquelle est présent un matériau moussé (7), dans lequel ladite plaque inférieure (2) est pourvue de nervures (3, 4) sur ses côtés longitudinaux, entre lesquelles est présent ledit matériau moussé (7), et comprenant une marque de jonction de deux nervures successives (3, 4) assemblées bout à bout le long d'un profil de raccordement (5) revêtu d'un adhésif sur les faces d'extrémité opposées des nervures (3, 4).

14. Construction formant paroi ou toit comprenant un élément isolant (8) ou plus selon la revendication 13.
